# EUROPÄISCHE PATENTSCHRIFT

(11) **EP 2 175 115 B1**
(45) Veröffentlichungstag und Bekanntmachung des Hinweises auf die Patenterteilung: **28.03.2012**
(21) Anmeldenummer: 09172023.5
(22) Anmeldetag: 02.10.2009
(51) Int. Cl.: F01N 9/00, F01N 11/00, B01D 53/30, B01D 53/94, F01N 3/022, F01N 3/28

(54) **Vorrichtung zur Abgasbehandlung mit einer Sensor-Folie**
Device for treating waste gas with a sensor film
Dispositif de traitement des gaz d'échappement avec un film de détection

(30) Priorität: 10.10.2008 DE 102008051169
(43) Veröffentlichungstag der Anmeldung: 14.04.2010
(73) Patentinhaber: Emitec Gesellschaft für Emissionstechnologie mbH, 53797 Lohmar (DE)
(72) Erfinder: Hodgson, Jan, 53840, Troisdorf (DE); Brück, Rolf, 51429, Bergisch Gladbach (DE)
(74) Vertreter: Rössler, Matthias

(56) Entgegenhaltungen:
- EP-A- 1 106 797
- EP-A- 1 389 268
- DE-A1- 4 301 564
- DE-A1- 4 303 581
- DE-A1- 19 542 038
- DE-A1-102005 001 756
- DE-U1- 9 320 985

## Beschreibung

Die vorliegende Erfindung betrifft eine Vorrichtung zur Abgasbehandlung, aufweisend zumindest ein Gehäuse mit einer Innenfläche und wenigstens eine in dem Gehäuse angeordnete Sensor-Folie, welche wenigstens mit einem Sensorelement und einem Leiterelement ausgeführt ist, wobei die Sensor-Folie eine Kante hat, bis zu der sich das Leiterelement hin erstreckt. Die Sensor-Folie ist dabei so angeordnet, dass die Kante an der Innenfläche des Gehäuses anliegt. Die Erfindung findet insbesondere Anwendung in Abgasanlagen von Diesel- oder Otto-Motoren bei Kraftfahrzeugen.

Der DE 93 20 985 U1 beschreibt einen metallischen Wabenkörper mit einer Mess- bzw. Heißstruktur, die hier als sogenannter Mantelleiter beschrieben ist. Dieser ist zwischen zwei dünnen Blechen eingewalzt und wird so in die Struktur des Wabenkörpers eingebaut. Der Mantelleiter umfasst einen elektrischen Leiter, der in einem metallischen Mantel angeordnet ist, wobei diese durch eine keramische Isolierung voneinander elektrisch isoliert sind. Bei der Durchführung des Mantelleiters durch das Gehäuse kann der metallische Mantel mit dem Gehäuse dicht verschweißt werden. Dabei wird eine elektrische Isolierung des Leiters gegenüber dem Gehäuse allerdings durch die Isolierung des Mantelleiters bereits realisiert. Nachteilig bei diesem Mantelleiter ist insbesondere auch, dass dieser einen entsprechenden Schlitz am Gehäuse erfordert, durch den der Mantelleiter bei Einführen der Wabenstruktur in das Gehäuse durchgeführt werden muss. Dieser Schlitz muss nachträglich verschlossen werden, so dass ein entsprechend stabiles Gehäuse gewährleistet ist.

Aus der EP 1 389 268 B1 ist ein Sensor zur Überwachung und/oder Steuerung eines Katalysators, insbesondere eines Kraftfahrzeugkatalysators, beschrieben. Der Grundgedanke bei einer solchen Sensor-Folie ist, dass z. B. ein Temperaturfühler direkt mit einer katalytisch aktiven Beschichtung und/oder der Folie in Kontakt ist. Ganz besonders bevorzugt ist dabei, dass das Sensorelement nach Art einer Dünnschicht auf der metallischen Folie selbst aufgebracht ist. Dort wird auch beschrieben, dass die Sensor-Folie mit einer geeigneten Kontaktierungsmöglichkeit für eine spätere Weiterverarbeitung der damit gewonnenen Signale bzw. Messergebnisse ausgestattet sein muss. Problematisch kann hier die Weiterleitung des Signals zu entfernten Anschluss- oder Erfassungseinrichtungen sein.

Hiervon ausgehend ist es Aufgabe der vorliegenden Erfindung, die mit Bezug auf den Stand der Technik geschilderten Probleme zumindest teilweise zu lösen. Insbesondere soll eine Vorrichtung zur Abgasbehandlung angegeben werden, bei der eine einfache Kontaktierungsmöglichkeit realisiert ist, wobei insbesondere auch die Herstellung einer solchen Vorrichtung im Rahmen einer Serien-Fertigung prozesssicher realisiert werden soll.

Diese Aufgaben werden gelöst mit einer Vorrichtung gemäß den Merkmalen des Anspruchs 1. Weitere vorteilhafte Ausgestaltungen sind in den abhängig formulierten Ansprüchen angegeben. Es ist darauf hinzuweisen, dass die in den Ansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, veranschaulicht die Erfindung weiter und gibt zusätzliche Ausführungsbeispiele an.

Die erfindungsgemäße Vorrichtung zur Abgasbehandlung weist zumindest ein Gehäuse mit einer Innenfläche und wenigstens eine in dem Gehäuse angeordnete Sensor-Folie auf. Die Sensor-Folie ist mit wenigstens einem Sensorelement und einem Leiterelement ausgeführt. Außerdem ist bei der Sensor-Folie eine Kante vorgesehen, bis zu der sich das Leiterelement hin erstreckt und die an der Innenfläche des Gehäuses anliegt. Das Gehäuse hat weiter eine Öffnung zur Kontaktierung des Leiterelements, die auf der Innenfläche von einer elektrischen Isolier-schicht umgeben ist. Außerdem ist weiter die wenigstens eine Sensor Folie mit dem Gehäuse verlötet und das zumindest eine Leiterelement nahe der kante mit einer Elektrode stoffschlüssig verbunden, die sich durch die Öffnung hindurch erstreckt.

Zunächst ist darauf hinzuweisen, dass bezüglich der konkreten Ausgestaltung der Sensor-Folie und ganz besonders im Zusammenhang mit der Ausführung des Sensorelements und/oder des Leiterelements auf die Erläuterungen der EP 1 389 268 B1 Bezug genommen werden kann, so dass der dortige Offenbarungsinhalt hier vollständig zur Beschreibung der Sensor-Folie herangezogen werden kann.

Zur Anordnung der Sensor-Folie im Gehäuse ist bevorzugt, dass diese den Querschnitt des Gehäuses geradlinig und/oder gewunden überspannt. Insoweit ist bevorzugt, dass beide Kanten der Sensor-Folie an verschiedenen Stellen der Innenfläche des Gehäuses zur Anlage gebracht sind. Das mindestens eine Sensorelement befindet sich demnach an der Oberfläche der Sensor-Folie und hat (jeweils) mindestens ein Leiterelement, das sich radial auswärts entlang der Sensor-Folie hin zur Kante erstreckt. Ganz besonders bevorzugt ist dann, dass sich alle Leiterelemente einer Sensor-Folie hin zu derselben Kante der Sensor-Folie hin erstrecken. In den meisten Fällen wird es ausreichen, wenn das mindestens eine Leiterelement (und/oder sogar das Sensorelement) glatt bzw. vollständig auf der Oberfläche der Sensor-Folie anliegt. Gerade bei Vorrichtungen, die besonders hohen Temperaturunterschieden unterworfen sind und/oder bei Vorrichtungen, bei denen sich die Materialien des Leiterelements und der Sensor-Folie signifikant im Hinblick auf die thermische Ausdehnung unterscheiden, können in der Anordnung Maßnahmen getroffen werden, die eine (teilweise) Relativbewegung von Leiterelement und der Sensor-Folie ermöglichen. So kann das Leiterelement beispielsweise nur teilweise mit der Sensor-Folie verbunden und mit einer Wellung (in der Ebene der Sensor-Folie und/oder quer dazu) ausgeführt sein.

In dem Gehäuse ist nun wenigstens eine Öffnung zur Kontaktierung des Leiterelements vorgesehen. Es ist auch möglich, dass mehrere Öffnungen, insbesondere in fluchtender Anordnung, bei dem Gehäuse vorgesehen sind, die zur Kontaktierung unterschiedlicher Leiterelemente dienen. Es ist aber auch möglich, dass nur eine Öffnung zur Kontaktierung mehrerer Leiterelemente vorgesehen ist. Die Öffnung ist regelmäßig nach Art eines runden Lochs ausgeführt, dass sich durch das Gehäuse hindurch erstreckt und somit einen seitlichen Zugang zu der Sensor-Folie ermöglicht. Auf der die Öffnung umgebenden Innenfläche ist nunmehr eine elektrische Isolierschicht vorgesehen. Eine "elektrische Isolierschicht" kann beispielsweise stoffschlüssig mit dem Gehäuse ausgeführt sein, es ist aber auch möglich, hier separate Bauteile vorzusehen. Bevorzugt ist in der Ausgestaltung eine Isolierschicht, die als Beschichtung auf der Innenfläche des Gehäuses ausgeführt ist. Die elektrische Isolierschicht umschließt bevorzugt den unmittelbaren Umgebungsbereich der Öffnung, so dass beispielsweise ein Randbereich um die Öffnung mit einer Erstreckung von mindestens 2 cm oder bevorzugt sogar mindestens 5 cm gebildet ist. Mit Hilfe dieser elektrischen Isolierschicht wird insbesondere vermieden, dass eine Signalweiterleitung, ausgehend von den Leiterelementen, hin zum Gehäuse erfolgen kann. Dies könnte gegebenenfalls im Rahmen einer Serien-fertigung auftreten, wenn bestimmte Toleranzen nicht eingehalten werden können.

Ganz besonders bevorzugt ist die Ausgestaltung der Vorrichtung in der Art, dass mit der mindestens einen Sensor-Folie ein Wabenkörper ausgebildet ist. Zu diesem Zweck kann die Sensor-Folie beispielsweise mit einer Mehrzahl weiterer, zumindest teilweise strukturierter metallischer Folien angeordnet sein, die zusammen geschichtet und/oder gestapelt in das Gehäuse eingebracht sind. Dabei ist bevorzugt, dass die Folien zusammen miteinander aufgewickelt oder gewunden angeordnet sind. Ganz besonders bevorzugt ist darüber hinaus, dass die zumindest teilweise strukturierten metallischen Folien und die Sensor-Folie mit im Wesentlichen gleichen Dimensionen bereitgestellt werden, also insbesondere die Foliendicke. Damit wird eine einfache Handhabung der Folien bei der Herstellung des Wabenkörpers und der Integration des Wabenkörpers in das Gehäuse realisiert.

Die Elektrode geht insbesondere an zur Abnahme des Signals des Leiterelements. Die Elektrode kann dabei mit der Sensor-Folie im Bereich des Leiterelements verlötet und/oder verschweißt sein. Die stoffschlüssige Verbindung ist dabei so ausgeführt, dass sie dauerhaft den im Abgassystem von Verbrennungskraftmaschinen herrschenden Umgebungsbedingungen standhält. Zu diesem Zweck kann es vorteilhaft sein, dass das Leiterelement einen verbreiterten bzw. vergrößerten Verbindungsbereich hin zur Elektrode ausbildet, um eine großflächige Anbindung an die Elektrode zu ermöglichen.

Gerade in diesem Zusammenhang wird als vorteilhaft angesehen, dass die Elektrode in einer gasdicht auf einer Außenfläche des Gehäuses montierten Hülse elektrisch isoliert und montiert ist. Das heißt mit anderen Worten insbesondere, dass auf der Außenfläche und um die Öffnung herum eine metallische Hülse angeordnet ist, beispielsweise mit einer gasdichten Schweißnaht. Die Hülse kann innen mit einer Isolierung ausgekleidet sein und die Elektrode sicher aufnehmen. So wird insbesondere auch gewährleistet, dass kein Abgas durch die Hülse hindurch nach außen gelangt.

Des Weiteren ist hier auch bevorzugt, dass zumindest die Elektrode oder die Hülse direkt mit einem Anschlussstecker verbunden ist. Dabei kann beispielsweise auch vorgesehen sein, dass der Anschlussstecker direkt an der Elektrode und der Hülse befestigt ist. Dabei sind hier insbesondere Mittel zur reduzierten Wärmeübertragung hin zu dem Anschlussstecker und/oder geeigneter Materialien im Hinblick auf die Temperaturbelastung des Anschlusssteckers auszuwählen. Der Anschlussstecker dient insbesondere dazu, einen flexiblen Leiter lösbar zu befestigen, also beispielsweise ein Kabel.

Die wenigstens eine Sensor-Folie ist in dem Gehäuse verlötet. Dabei kommt insbesondere eine Verbindung mittels Hartlot in Betracht. In manchen Fällen kann es auch sinnvoll sein, die Sensor-Folie mit dem Gehäuse zumindest teilweise zu verschweißen.

Gemäß einer Weiterbildung wird auch vorgeschagen, dass die auf der Innenfläche des Gehäuses um die Öffnung vorgesehene elektrische Isolierschicht mit einem Material ausgefüllt ist, das nicht verlötbar ist. Das heißt mit anderen Worten, dass die Isolierschicht dann zusätzlich auch als Passivierungsschicht für eine Lötverbindung ausgeführt sein kann. Hierfür sind besonders raue Oberflächen und/oder Schichten mit Aluminiumoxid bevorzugt.

Darüber hinaus wird auch vorgeschlagen, dass das mindestens eine Leiterelement wenigstens teilweise mit einer Schutzbeschichtung ausgeführt ist. Die Schutzbeschichtung dient insbesondere dazu, das Leiterelement gegenüber den benachbarten metallischen Folien elektrisch zu isolieren und/oder einen Abrieb zu vermeiden. Dies gilt insbesondere für den Fall, dass das Leiterelement mit einem Druckverfahren auf die Folie aufgebracht ist.

Weiter ebenfalls vorgesehen ist, dass die dem wenigstens einen (frei liegenden) Sensorelement gegenüber liegenden bzw. benachbarten metallischen Folien mit zumindest einem Rücksprung und/oder eine Struktur-Reduzierung ausgeführt sind, so dass deren Abstand hin zur Sensor-Folie im Bereich des wenigstens einen Sensorelements (lokal) vergrößert ist. Hierdurch wird insbesondere vermieden, dass das wenigstens eine Sensorelement und/oder die darauf befindliche (katalytische) Beschichtung von der metallischen Folie kontaktiert oder sogar abgerieben wird. Damit wird die Messgenauigkeit und Zuverlässigkeit der gewonnenen Informationen auch über einen langen Betriebszeitraum aufrecht erhalten.

Die Erfindung sowie das technische Umfeld werden nachfolgend anhand der Figuren erläutert. Die Figuren zeigen besonders bevorzugte Ausführungsvarianten, auf die die Erfindung jedoch nicht beschränkt ist. Es zeigen schematisch:
- Fig. 1:: eine Draufsicht auf eine Sensor-Folie,
- Fig. 2:: perspektivisch eine erste Ausführungsvariante der Vorrichtung,
- Fig. 3:: ein Detail einer Ausführungsvariante der Vorrichtung,
- Fig. 4:: eine Ausführungsvariante eines Wabenkörpers für eine entspre- chende Vorrichtung, und
- Fig. 5:: einen Querschnitt durch eine weitere Ausführungsvariante eines Wabenkörpers im Detail.

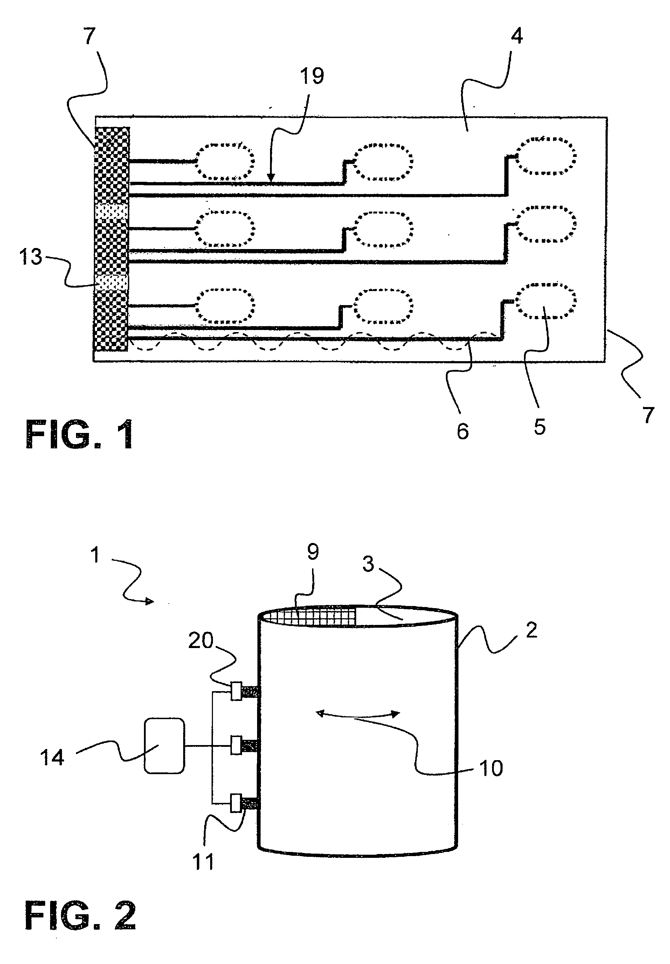

In Fig. 1 ist als Draufsicht und in gestreckter Anordnung eine Sensor-Folie 4 veranschaulicht. Diese umfasst eine Vielzahl von Sensorelementen 5, die hier in waagerechten Zeilen und in senkrechten Reihen angeordnet sind. Jedes Sensorelement 5 ist dabei mit einem separaten Leiterelement 6 ausgeführt. Ausgehend von dem Sensorelement 5 erstreckt sich das Leiterelement 6 hin zu der hier links dargestellten Kante 7 der Sensor-Folie 4. Im Bereich dieser Kante 7 werden die Leiterelemente 6 einer Reihe der Sensorelemente 5 zusammengeführt. Zur Abgrenzung der gruppierten Leiterelemente 6 sind jeweils elektrische Isolationsmittel 13, hier z.B. nach einer Beschichtung, zwischen den jeweiligen Leiterelementen 6 ausgeführt. Zur näheren Beschreibung der Art der Sensorelemente, der Leiterelemente sowie die Applikation bzw. Integration von Sensorelement und/oder Leiterelement zur metallischen Trägerfolie sei auf den Inhalt der EP 1 389 268 B1 verwiesen. Ergänzend sei noch hinzugefügt, dass die Leiterelemente 6 beispielsweise nach Art einer Beschichtung bzw. einer Auftragsschicht auf die Sensor-Folie 4 aufgebracht sein können und zum Schutz während des Betriebes mit einer Schutzbeschichtung 19 überdeckt sind. Auch ist hier mit einer gestrichelten Linie angedeutet, dass das Leiterelement 6 nur teilweise mit der Sensor-Folie 4 verbunden und mit einer Wellung (in der Ebene der Sensor-Folie 4) ausgeführt sein kann, um unterschiedliches thermisches Ausdehnungsverhalten zu kompensieren.

Fig. 2 veranschaulicht nun eine Ausführungsvariante einer Vorrichtung 1 zur Abgasbehandlung. Diese weist ein Gehäuse 2, hier in einer zylindrischen Bauart, auf, das sich durch eine Innenfläche 3 und eine Außenfläche 12 beschreiben lässt. Ebenfalls angedeutet ist hier, dass im Inneren des Gehäuses 2 an der Innenfläche 3 anliegend ein Wabenkörper 9 ausgebildet ist.

Um nunmehr die in den Sensorelementen 5 bzw. der Sensor-Folie 4 generierten Informationen und Signale hin zu einer Erfassungseinheit 14 (z.B. einer Motorsteuerung) weiterzuleiten, weist das Gehäuse 2 eine Mehrzahl von Elektroden 11 auf, die sich in innere Bereiche des Gehäuses 2 hinein erstrecken und mit den Leiterelementen 6 der Sensor-Folie 4 verbunden sind, insbesondere stoffschlüssig verlötet bzw. verschweißt. Beim der hier gezeigten Ausführungsvariante ist direkt an der Elektrode 11 jeweils ein Anschlussstecker 20 vorgesehen, von dem aus dann die Signalweiterleitung mittels eines Kabels hin zur Erfassungseinheit 14 weitergeleitet wird. Hier sind die Elektroden 11 in einer Reihe fluchtend angeordnet, dies ist aber nicht notwendig, so dass die Elektroden 11 auch über den Umfang 10 des Gehäuses 2 verteilt angeordnet sein können.

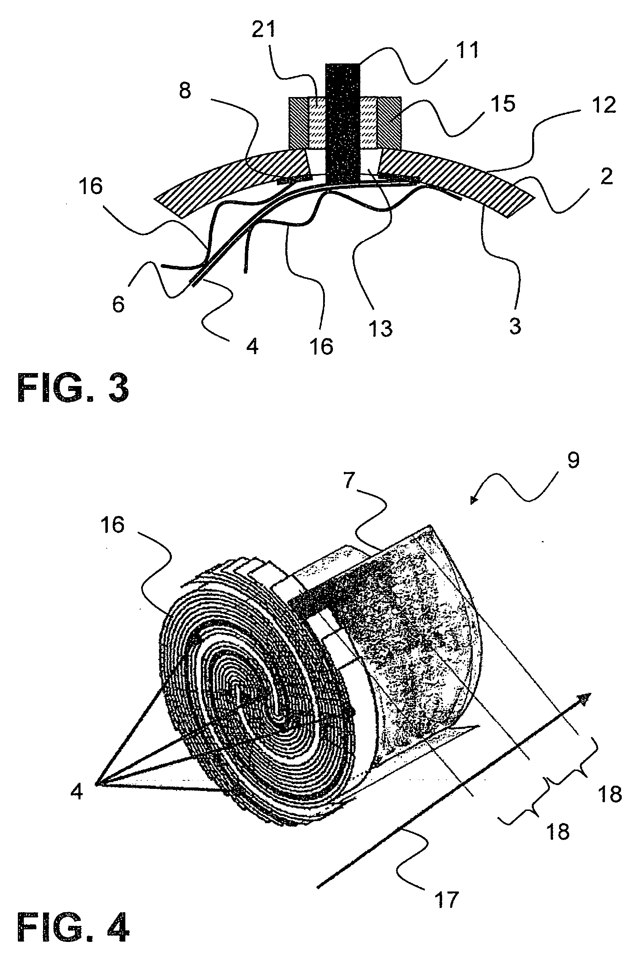

Fig. 3 zeigt nun ein Detail einer Ausführungsvariante der Vorrichtung im Querschnitt. Dargestellt ist das Gehäuse 2 mit einer Öffnung 13, durch die sich die Elektrode 11 hindurch erstreckt. Im Inneren des Gehäuses 2 sind zwei gewellte Metallfolien 16 angedeutet, zwischen denen eine glatte Sensor-Folie 4 angeordnet ist. Auf dieser Sensor-Folie 4 ist ein Leiterelement 6 angedeutet, dass sich bis hin zur Kante erstreckt. Die Sensor-Folie 4, wie alle anderen Folien auch, liegt mit ihrer Kante an der Innenfläche 3 des Gehäuses 2 an. Die Elektrode 11 erstreckt sich dabei durch eine gasdicht auf der Außenfläche 12 des Gehäuses 2 verschweißten Hülse 15 fixiert, wobei zwischen der Hülse 15, die regelmäßig aus Metall ist, und der Elektrode 11 eine Isolierung 21 vorgesehen ist. Auf der Innenfläche 3 um die Öffnung 13 herum ist zudem eine elektrische Isolierschicht 8 vorgesehen, die gewährleisten soll, dass auch bei unterschiedlichen Einbausituationen der Metallfolien 16 bzw. der Sensor-Folie 4 mit Bezug auf die Öffnung 13 eine Weiterleitung der Signale nur über die Elektrode 11 stattfindet.

Fig. 4 zeigt schematisch einen Wabenkörper 9, wie er in dem beschriebenen Gehäuse 2 integriert werden kann. Der Wabenkörper 9 ist dabei mit einer s-förmig gewundenen Sensor-Folie 4 und einer Mehrzahl von glatten und gewellten Metallfolien 16 ausgebildet. Durch eine beispielsweise in (axiale) Erstreckungsrichtung 17 versetzte Anordnung der Sensorelemente 5, wie dies beispielsweise in Fig. 1 gezeigt ist, können auch getrennte Informationen zu unterschiedlichen Abschnitten 18 der Vorrichtung während des Betriebes in einer Abgasanlage gewonnen werden. Ergänzend sei noch darauf hingewiesen, dass die benachbarten Metallfolien 16 im Bereich der Sensorelemente 5 der Sensor-Folie 4 Aussparungen, Eindellungen und/oder separate Beschichtungen aufweisen können, um eine Kompensation der erhöhten Sensorelemente zu verwirklichen und/oder eine einfache Kontaktierung des Sensorelementes 5 mit in dem Abgas zu ermöglichen.

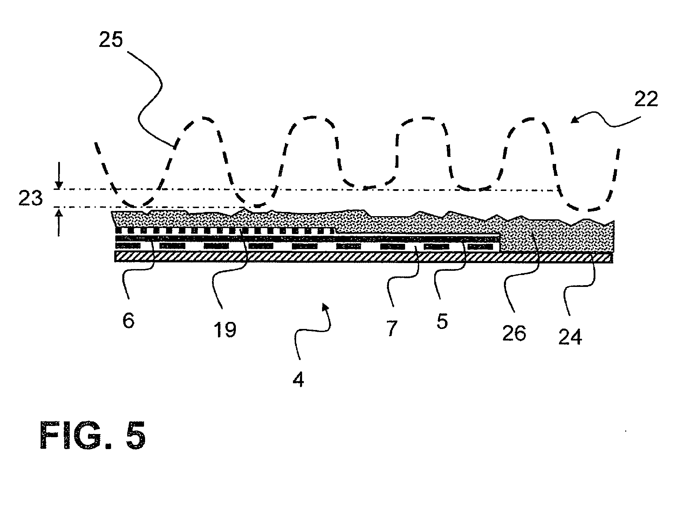

Fig. 5 zeigt nun schematisch ein Detail eines weiteren Ausführungsbeispiels im Querschnitt. Dargestellt sind (gestrichelt) eine Welllage 25 (metallische Folie) mit einer Struktur 22 und eine Glattlage 24 (metallische Folie), die zusammen die Kanäle des Wabenkörpers bilden. Auf der Glattlage ist zunächst eine Isolierschicht 7 ausgebildet, auf der das Leiterelement 6 aufgebracht ist. Das Leiterelement 6 ist wiederum mit einer Schutzbeschichtung 19 bedeckt, die sich bis zum Sensorelement 5 erstreckt, dieses aber nicht bedeckt. Über diese Glattlage 24 ist nun Washcoat 26 (ggf. mit katalytisch aktiven Substanzen versehen) aufgebracht, ebenso wie über die Welllage 25. Damit ist das Sensorelement 5 direkt mit dem Washcoat 26 in Kontakt. Eine solche Glattlage 24 mit dem Sensorelement 5 stellt ebenfalls eine Sensor-Folie 4 dar.

Um nunmehr zu verhindern, dass die Welllage 25 bzw. deren Struktur 22 den auf dem Sensorelement 5 befindlichen Washcoat 26 beeinflusst und/oder abnutzt, ist gegenüberliegend dem Sensorelement 5 eine Struktur-Reduzierung 23 vorgesehen, so dass sich hier der Abstand von Glattlage 24 zu Welllage 25 vergrößert. Zu berücksichtigen ist hierbei, dass regelmäßig eine stoffschlüssige Verbindung zwischen Welllage 25 und Glattlage 24 (z. B. mittels Löten, Diffusion und/oder Schweißen) vorliegt und beide Lagen mit Washcoat 26 beschichtet sind.

Die Erfindung findet insbesondere Anwendung bei Vorrichtungen nach Art von Katalysatorelementen, Partikelabscheidern, Adsorbern und dergleichen. Diese Vorrichtungen sind üblicherweise in Abgassystemen von Verbrennungskraftmaschinen, insbesondere von Kraftfahrzeugen eingebaut.

### Bezugszeichenliste

- 1: Vorrichtung
- 2: Gehäuse
- 3: Innenfläche
- 4: Sensor-Folie
- 5: Sensorelement
- 6: Leiterelement
- 7: Kante
- 8: Isolierschicht
- 9: Wabenkörper
- 10: Umfang
- 11: Elektrode
- 12: Außenfläche
- 13: Öffnung
- 14: Erfassungseinheit
- 15: Hülse
- 16: Metallfolie
- 17: Erstreckungsrichtung
- 18: Abschnitt
- 19: Schutzbeschichtung
- 20: Anschlussstecker
- 21: Isolierung
- 22: Struktur
- 23: Struktur-Reduzierung
- 24: Glattlage
- 25: Welllage
- 26: Washcoat

## Patentansprüche

1. Vorrichtung (1) zur Abgasbehandlung aufweisend zumindest ein Gehäuse (2) mit einer Innenfläche (3) und wenigstens eine in dem Gehäuse (2) angeordnete Sensor-Folie (4), welche wenigstens mit einem Sensorelement (5) und einem Leiterelement (6) ausgeführt ist und bei der eine Kante (7) vorgesehen ist, bis zu der sich das Leiterelement (6) hin erstreckt und die an der Innenfläche (3) des Gehäuses (2) anliegt, wobei das Gehäuse weiter eine Öffnung (13) zur Kontaktierung des Leiterelements (6) aufweist, die auf der Innenfläche (3) von einer elektrischen Isolierschicht (8) umgeben ist, wobei weiter die wenigstens eine Sensor-Folie (4) mit dem Gehäuse (2) verlötet ist und das zumindest eine Leiterelement (6) nahe der Kante (7) mit einer Elektrode (11) stoffschlüssige verbunden ist, die sich durch die Öffnung (13) hindurch erstreckt .

2. Vorrichtung (1) nach Patentanspruch 1, bei der mit der zumindest einen Sensor-Folie (4) ein Wabenkörper (9) ausgebildet ist.

3. Vorrichtung (1) nach Patentanspruch 1 oder 2, bei der die Elektrode (11) in einer gasdicht auf einer Außenfläche (12) des Gehäuses (2) montierten Hülse (15) elektrisch isoliert montiert ist.

4. Vorrichtung (1) nach einem der vorhergehenden Patentansprüche, bei der zumindest die Elektrode (11) oder die Hülse (15) direkt mit einem Anschlussstecker (20) verbunden ist.

5. Vorrichtung (1) nach einem der vorhergehenden Patentansprüche, bei der die auf der Innenfläche (3) des Gehäuses um die Öffnung (13) vorgesehene elektrische Isolierschicht (8) mit einem Material ausgeführt ist, das nicht verlötbar ist.

6. Vorrichtung (1) nach einem der vorhergehenden Patentansprüche, bei der das mindestens eine Leiterelement (6) wenigstens teilweise mit einer Schutzbeschichtung (19) ausgeführt ist.

## Claims

1. Device (1) for exhaust-gas treatment having at least one housing (2) with an inner surface (3) and having at least one sensor foil (4) arranged in the housing (2), which sensor foil (4) is formed at least with a sensor element (5) and a conductor element (6) and which sensor foil (4) is provided with an edge (7) up to which the conductor element (6) extends and which bears against the inner surface (3) of the housing (2), with the housing (2) also having an opening (13) for the contacting of the conductor element (6), which opening (13) is surrounded on the inner surface (3) by an electrical insulating layer (8), in which further the at least one sensor foil (4) is soldered to the housing (2) and the at least one conductor element (6) is cohesively connected, close to the edge (7), to an electrode (11) which extends through the opening (13).

2. Device (1) according to claim 1, in which a honeycomb body (9) is formed with the at least one sensor foil (4).

3. Device (1) according to claim 1 or 2, in which the electrode (11) is mounted in an electrically insulated fashion in a sleeve (15) which is mounted in a gas-tight fashion on an outer surface (12) of the housing (2).

4. Device (1) according to one of the preceding claims, in which at least the electrode (11) or the sleeve (15) is directly connected to a connecting plug (20).

5. Device (1) according to one of the preceding claims, in which the electric insulating layer (8) which is provided on the inner surface (3) of the housing around the opening (13) is formed with a material which cannot be soldered.

6. Device (1) according to one of the preceding claims, in which the at least one conductor element (6) is formed at least partially with a protective coating (19).

## Revendications

1. Dispositif (1) de traitement de gaz d'échappement, ayant au moins un boîtier (2) avec une surface intérieure (3) et au moins un film de détection (4) agencé dans le boîtier (2) lequel est réalisé au moins avec un élément de détection (5) et avec un élément conducteur (6) et où un bord (7) est prévu, jusqu'où l'élément conducteur (6) s'étend et qui s'applique contre la surface intérieure (3) du boîtier (2), le boîtier ayant en outre une ouverture (13) pour contacter l'élément conducteur (6) qui sur la surface intérieure (3) est entourée d'une couche isolante électrique (8), où en outre l'au moins un film de détection (4) est brasé avec le boîtier (2) et l'au moins un élément conducteur (6) est relié à proximité du bord (7) de façon matériellement jointive avec une électrode (11) qui s'étend à travers l'ouverture (13).

2. Dispositif (1) selon la revendication 1, dans le cas duquel un corps en nids d'abeilles (9) est réalisé avec l'au moins un film de détection (4).

3. Dispositif (1) selon la revendication 1 ou 2, dans le cas duquel l'électrode (11) est montée dans une douille (15) montée de façon à être électriquement isolée de manière étanche au gaz sur une surface extérieure (12) du boîtier (2).

4. Dispositif (1) selon l'une des revendications précédentes, dans le cas duquel au moins l'électrode (11) ou la douille (15) sont connectées directement avec une fiche de raccordement (20).

5. Dispositif (1) selon l'une des revendications précédentes, dans le cas duquel la couche isolante électrique (8) prévue sur la surface intérieure (3) du boîtier autour de l'ouverture (13) est réalisée avec un matériau qui ne peut pas être brasé.

6. Dispositif (1) selon l'une des revendications précédentes, dans le cas duquel l'au moins un élément conducteur (6) est réalisé au moins partiellement avec un revêtement de protection (19).
